# EUROPÄISCHE PATENTSCHRIFT

(11) **EP 4 274 864 B1**
(45) Veröffentlichungstag und Bekanntmachung des Hinweises auf die Patenterteilung: **16.04.2025**
(21) Anmeldenummer: 22705715.5
(22) Anmeldetag: 03.01.2022
(51) Int. Cl.: C09D 5/00

(54) **VERWENDUNG EINES MITTELS ZUM GRUNDIEREN VON SILIKONOBERFLÄCHEN**
USE OF AN AGENT FOR PRIMING SILICON SURFACES
UTILISATION D'UN AGENT POUR APPRÊTER DES SURFACES DE SILICONE

(30) Priorität: 06.01.2021 DE 102021100113
(43) Veröffentlichungstag der Anmeldung: 15.11.2023
(73) Patentinhaber: Fexsil GmbH, 47574 Goch (DE)
(72) Erfinder: NASS, Jörg, 47574 Goch (DE)
(74) Vertreter: Bauer, Dirk
(86) Internationale Anmeldenummer: PCT/EP2022/050012
(87) Internationale Veröffentlichungsnummer: WO 2022/148721

(56) Entgegenhaltungen:
- WO-A1-2019/134817
- CN-A- 105 062 255
- KR-B1- 101 941 422
- US-A- 4 348 435

## Beschreibung

Die Erfindung betrifft die Verwendung eines Mittels zum Grundieren von Silikonoberflächen, nämlich ausvulkanisierte Silikonfugen an Fenstern, Türen, im Verglasungsbereich sowie Sanitärbereich.

### Hintergrund

Silikonoberflächen sind ohne das erfindungsgemäße Mittel nicht überstreichbar.

### Stand der Technik

Im Gegensatz zur Erfindung bietet die Fa. Euroteam Fugenbänder an, die in Neueinbringung angewandt werden (DE 20 2015 006 906 Ul). Diese bestehen nicht aus Silikon, sondern aus Polyurethan. Abgesehen davon, dass Polyurethan durchaus überstreichbar ist, sind die Fugenbänder der Fa. Euroteam für die Verklebung z. B. auf Beton, Stein, etc. vorgesehen, jedoch nicht für einen nachfolgenden Farbanstrich.

Diese Produkte sind in keiner Art und Weise vergleichbar mit der vorliegenden Erfindung. Die Anwendung und das Einsatzgebiet betreffen einen noch nicht einmal artverwandten Bereich. Silikonfugen sind nämlich bereits bestehende Baufugen an Fenstern, Türen, Verglasungsbereich, Sanitärbereich bis hin zum Konstruktionsbereich, z. B. bei Fahrzeugen und Maschinen.

Es sollen - im Gegensatz zum genannten Stand der Technik - verlaufsfreie wie abriebfeste Anstriche von bestehenden, ausvulkanisierten Silikonfugen und anderen Dichtstoffen möglich sein.

Ein Verfahren zum Grundieren von Silikonoberflächen ist aus der WO 2019/134 817 Al bekannt. Dazu wird eine Mischung aus einem Imprägniermittel, einem Lack und Wasser
oder ohne Wasser zum Grundieren von Silikonoberflächen verwendet, wobei die Mischung aus den Komponenten erst unmittelbar vor der Anwendung hergestellt wird, wobei das Imprägniermittel eine Säure enthält, wasserfrei ist und ein Siliciumdioxid-Precursor ist, der im sauren Milieu in Anwesenheit von Wasser zu Siliciumdioxid-Partikeln hydrolysiert, und wobei der Lack eine wasserverdünnbare Dispersions-Lackfarbe ist.

Hier ist es also erforderlich, dass die aufzutragende Mischung aus den Komponenten erst unmittelbar vor der Anwendung hergestellt wird. Diese Mischung enthält keine vergleichbaren Inhaltsstoffe wie das erfindungsgemäße Produkt.

Das Dokument KR 101941422 B1 betrifft die Herstellung eines Schmuckstücks oder Accessoires. Es wird die Herstellung eines Germaniumchips mit den Schritten beschrieben, dass zunächst ein Germaniumchip vorbereitet, dann ein Harz mit feinkörnigem Goldpulver sowie Ferritpulver gemischt wird, um einen Beschichtungsfilm herzustellen, und anschließend eine Oberflächenbehandlung des genannten Germaniumchips mit dem vorgenannten Beschichtungsfilm vorgenommen wird.

Das Dokument CN 105062255 A offenbart eine antibakteriell wirksame Emulsion als Anstrich-Grundierung und ein zugehöriges Herstellverfahren. Insbesondere soll bei Bauwerken bzw. deren Wänden oder Decken eine Grundierungsschicht vor dem Auftrag eines Latexanstrichs geschaffen werden. Dabei stehen einerseits antibakterielle sowie feuerhemmende Aspekte im Fokus, aber auch die Verwendung möglichst pflanzlicher Ausgangsstoffe.

Gegenstand des Dokuments US 4,348,435 A ist die Verbesserung der Haftung zwischen Klebstoffen auf Silikonelastomerbasis und organischen Elastomeren, wozu ein Primer genutzt werden soll, der auf beiden vorgenannten Materialien, nämlich dem Silikonelastomer-Klebstoff und dem organischen Elastomer, anhaftet. Ziel soll dabei die Schaffung eines Mehrfachverglasungs-Elements sein, in dem einzelne Glasscheiben mit Hilfe von Abstandshaltern auf Distanz gehalten werden.

### Aufgabe und Lösung der Erfindung

Aufgabe der Erfindung: Es sollen die oben genannten Nachteile des Standes der Technik vermieden werden.

Diese Aufgabe wird bei einer Verwendung eines Mittels zum Grundieren von Silikonoberflächen der eingangs genannten Art erfindungsgemäß dadurch gelöst, dass das Mittel eine Emulsion mit mindestens folgenden Komponenten ist:
- ein zur Vulkanisation von Kautschukmischungen einsetzbarer Katalysator,
- ein organisches Lösungs- oder Verdünnungsmittel,
- Glaspulver,
- eine Lackfarbe als Trägersubstanz.

### Vorteile der Erfindung

Unter anderem werden die folgenden Vorteile erreicht: Die Erfindung ermöglicht verlaufsfreie wie abriebfeste Anstriche von bestehenden, ausvulkanisierten Silikonfugen und anderen Dichtstoffen.

Die Emulsion ist verträglich mit den meisten auf dem Markt befindlichen, handelsüblichen Anstrichsystemen.

Das erfindungsgemäße Mittel besteht aus mindestens vier notwendigen Komponenten, kann aber auch zusätzlich weitere Bestandteile enthalten. Die vier notwendigen Komponenten haben die folgende Funktion:
Die erste Komponente, der Katalysator, dient zum Vernetzen des Mittels nach dem Aufträgen auf die Silikonoberfläche.

Die zweite Komponente, das organische Lösungs- oder Verdünnungsmittel, dient hauptsächlich zum Einstellen der gewünschten Viskosität.

Die dritte Komponente, das Glaspulver, auch Glasmehl genannt, ist für die Haftung der Grundierung auf der Silikonoberfläche verantwortlich.

Alternativ kann an Stelle von Glaspulver oder auch zusammen damit tetrapodales Zinkoxid eingesetzt werden. Nähere Einzelheiten dazu finden sich in der deutschen Patentanmeldung 10 2021 100 113.7 vom 06.01.2021 der Anmelderin .

Die vierte Komponente, die Trägersubstanz, nämlich die Lackfarbe, ermöglicht bzw. fördert die Verbindung und die Haftung des nachfolgenden Anstrichs auf der auf getragenen und ausgehärteten Grundierung.

### Erfindungsgemäß ist als Komponente 1 (Katalysator), die die Funktion eines Verbinders im Gesamtsystem hat, einsetzbar:

Insbesondere ist eine Vulkanisationskomponente zur Herstellung eines technischen Silikon-Kautschuks sehr gut geeignet.

Vorteilhaft dazu einsetzbar sind die Produkte TFC Silikon Kautschuk Typ 2-1 des Herstellers Trollfactory, "Replisil 35 NO Komponente B" des Herstellers Siliconic.

### Erfindungsgemäß ist als Komponente 2 (organisches Lösungs- oder Verdünnungsmittel) einsetzbar:

Besonders bevorzugt ist ein Testbenzin oder Waschbenzin, z. B. Shellsol^{®} D 60 der Firma Shell, einzusetzen. Optional sind auch die Produkte D40, D100, D120,D140, D160 der Firma Shell möglich.

Möglich ist aber auch der Einsatz eines Öls aus der Gruppe Terpentinöl-Balsam und/oder Leinöl, und/oder von naturbelassenen ölen und/oder Mineralölen.

Vorteilhaft einsetzbar sind außerdem die Produkte Terpentin oder Owatrol Öl. Owatrol Öl ist ein stark durchdringendes, lufttrocknendes Öl, das allein, oder als Farbzusatzmittel verwendet werden kann.

### Erfindungsgemäß ist als Komponente 3 (Glaspulver) einsetzbar:

Zur Modifizierung der Oberflächenstruktur und zur Veränderung der Haftungseigenschaften ist eine Veränderung der Glaspulverstruktur möglich.

### Erfindungsgemäß ist als Komponente 4 (Trägersubstanz) einsetzbar:

Es kann eine wasserverdünnbare Dispersions-Lackfarbe oder vorzugsweise ein Acryllack verwendet werden.

Mit Vorteil einsetzbar ist z. B. das Produkt "Orgal PR 842A", ein Acrylat-Dispersionslack, und/oder das Produkt "Plextol D487" vom Hersteller Synthomer, eine Reinacrylatdispersion .

Der Erfinder hat bei der Entwicklung der Erfindung die folgenden technischen Schwierigkeiten in nicht naheliegender Weise überwunden:
- Eine Grundbasis war zu identifizieren, welche eine weitestgehende stabile und verlaufsfreie Haftung auf der Dichtstoffoberfläche (Silikon) gewährleistet: der Lackträger
- Um die Haftkraft unter mechanischen Beeinflussungen besser zu stabilisieren, sollte ein Stoff beigemischt werden, der eine Art Verkrallung mit der Oberfläche herstellt: das Glaspulver
- Des Weiteren war es nötig, einen chemisch dem Silikon ähnlichen Stoff hinzuzufügen, der eine Verträglichkeit zu der Silikonoberfläche sicherstellt: das Testbenzin
- Ein Katalysator bezeichnet in der Chemie einen Stoff, der die Reaktionsgeschwindigkeit durch die Senkung der Aktivierungsenergie einer chemischen Reaktion erhöht, ohne dabei selbst verbraucht zu werden. Er beschleunigt die Hin- und Rückreaktion gleichermaßen und ändert somit die Kinetik chemischer Reaktionen, nicht deren Thermodynamik.
- Vorgenannte Stoffe mussten unter Vakuum-Bedingungen dispergiert werden.

Vorteilhafte Ausgestaltungen der Erfindung sind in den Unteransprüchen angeführt.

So enthält die als Trägersubstanz eingesetzte Lackfarbe vorzugsweise 20 bis 70 Gew.-% eines Bindemittels aus der Gruppe Acrylat-Dispersionslack, Polyurethan, Epoxid, ein auf Epoxid basiertes Farbbindemittel, z. B. Epoxid Esta, Alkyd, Polysiloxan, ein acrylbasiertes Farbbindemittel, z. B. Lipaton SB 4520 von Synthomer, und/oder eine Reinacrylatdispersion.

Vorteilhafte Verwendungsmöglichkeiten der neuen Zusammensetzung liegen u. a. darin, bestehende Silikonfugen an Fenstern, Türen, Verglasungsbereich, Sanitärbereich bis hin zum Konstruktionsbereich für nachfolgende Anstrichsystem tatsächlich vorzubereiten.

Anstatt von nicht geeigneten Dichtstoffen, wie z.B. Acrylaten, können hochwertige Dichtstoffe in Form von Silikon eingebracht werden, da eine Anstrichfähigkeit mit dem erfindungsgemäßen Produkt nun gegeben ist.

Weitere vorteilhafte Anwendungsmöglichkeiten: Sperrende Eigenschaften für wechselwirkende Beeinflussung, wodurch Weichmacherwanderungen verhindert und/oder zum Beispiel Wasser-, Fett- und Rußflecken isoliert werden. Das farbliche Umgestalten von silikonhaltigen Produkten durch Überstreichen.

### Ausführungsbeispiele

Im Folgenden werden mehrere Ausführungsbeispiele der Erfindung näher beschrieben.

Ein Beispiel für die Anwendung des erfindungsgemäßen Produkts, um bestehende Silikonfugen an Fenstern, Türen, im Verglasungsbereich, im Sanitärbereich bis hin zum Konstruktionsbereich für nachfolgende Anstrichsystem tatsächlich vorzubereiten:
Ein bestehender Wohnblock mit vier Etagen und 16 Wohneinheiten soll von Maler Meier in der Farbe Weiß überstrichen werden. In dem Wohnblock sind 96 Fenster vorhanden. An den Fenstern sind somit etwa 400 Meter Silikonfugen in der Farbe grau vorhanden. Am Gebäude sind noch weitere 150 Meter graue Dehnungsfugen vorhanden. Es sind demnach 550 Meter Silikonfugen an dem Gebäude.

Für die bestehenden Silikonfugen gibt es im Stand der Technik keine Möglichkeit, diese zu überstreichen. Nun muss Maler Meier eine weitere Firma beauftragen, um bestehende Fugen herauszutrennen und diese passend zum weißen Anstrich erneuern zu lassen. Die Kosten für eine Restaurierung bzw. Neuverfugung liegen bei etwa 6000,00 Euro netto.

Wird nun das erfindungsgemäße Produkt von Maler Meier eingesetzt, können vorhandene Fugen überstrichen werden. Neben einer enormen Zeitersparnis, belaufen sich nun die Kosten für eine Gestaltung der Fugen im passenden Farbton auf etwa 700,00 Euro netto (ca. 8 m 2 Fugenanstrich). Maler Meier bzw. sein Kunde haben somit einen Kostenaufwand von nahezu 90% eingespart.

### Ein weiteres Beispiel:

Trockenbauer Janssen ist mit dem Innausbau einer Gipswandverkleidung beauftragt. Um das Gewerk für dem Maler fertig abzuschließen, setzt Fa. Janssen wie üblich einen Acryldichtstoff ein, um die Anschlussfugen an Decke und Wand zu verfugen. Trockenbauer Janssen weiß jedoch um die Nachteile der Verfügung mit Acryl. In der Vergangenheit hat er mit diesem überstreichbaren

Dichtstoff mehrfach die Erfahrung gemacht, dass nach Monaten oder auch Jahren Ablösungen durch Überdehnung entstanden und von Kunden reklamiert wurden.

Die Ursache dafür ist, dass Acryl durch den hohen Wasseranteil einer Schrumpfung unterliegt. Auch die Dehnfähigkeit von Acrylatdichtstoffen ist in der Regel auf 7 % beschränkt. Diese technische Eigenschaft führt zu den **o. g.** Problemen.

Bringt Fa. Janssen nun aber einen hochwertigeren Dichtstoff auf Silikonbasis in die Anschlussfugen ein, werden die zuvor genannten Probleme von Ablösungen durch die höhere Bewegungsaufnahme des Silikons (ca. 25 % und mehr) eliminiert.

Da sowohl der Trockenbauer als auch der Maler nachfolgend das erfindungsgemäße Mittel einsetzen, zeigt, dass das Produkt von verschiedenen Handwerkern in diversen Bauphasen im Innen- und Außenbereich eingesetzt werden kann. Durch die qualitativ hochwertige Verfügung werden Reklamationen verringert, Kosten eingespart und ein zufriedener Endkunde sichergestellt.

Optimal ist z. B. die folgende Zusammensetzung

| | | |
|---|---|---|
| Katalysator | 7, 14 | Gew. -% |
| Testbenzin | 10 | Gew. -% |
| Glas | 7, 14 | Gew. -% |
| Lack | 75, 72 | Gew. -% |

### Herstellung der erfindungsgemäßen Zusammensetzung

In den genannten Verhältnissen werden alle vier Komponenten unter Vakuumbedingungen im Dispergier-Rührer durchmischt. Eine maschinelle Abfüllung ist möglich.

### Test der oben genannten Zusammensetzung

Es wurden Langzeittests von überstrichenen Silikon- und Dichtstoffoberflächen mit positiven Ergebnissen unter europäischen Witterungsverhältnissen durchgeführt.

### Herstellung einer erfindungsgemäßen Zusammensetzung

Eingesetzt wurden
Glasmehl / Glaspulver ST 240 der Firma Reidt GmbH & **Co. KG,** 52224 Stolberg
Katalysator der Firma Troll Factory Rainer Habekost **e.K.,** 27339 Riede
Testbenzin Shellsol^{®} D 60 der Firma Shell
Acryllack der Firma P.A. Jansen GmbH u. Co. KG, Bad Neuenahr-Ahrweiler

### Ergebnisse der Tests mit diesen erfindungsgemäßen Zusammensetzungen

Unter "öl" ist hier ein organisches Lösungs- oder Verdünnungsmittel oder Testbenzin zu verstehen.

| Test 4 | Gewichtsprozent | Auswirkung | Ergebnis |
|---|---|---|---|
| Catalyst | 7, 14 % | Optimale Viskosität | Gute Haftkraft und Deckkraft, ohne Verläufe |
| Öl | 10 % | | |
| Glaspulver | 7, 14 % | | |
| Lack | 75, 72 % | | |

75,72 % Acryllack Jansen
7,14 % Glaspulver / Glasmehl
10,0 % D60 Testbenzin
7,14 % Catalyst (Silikon Kautschuk)
Weitere vorteilhafte Rezepturen:

### Versuchsrezeptur 1:

70,14 % Lipaton SB4520 von Symthomer
9,07 % Glaspulver / Glasmehl
11,60 % D60 Testbenzin
9,19 % Catalyst (Silikon Kautschuk)

### Versuchsrezeptur 2:

76,39 % Polyurethan Lack Wasserbasis
7,14 % Glaspulver / Glasmehl
10,00 % D60 Testbenzin
6,47 % Catalyst (Silikon Kautschuk)

### Versuchsrezeptur 3:

56,6 % Acryllack Wasserbasiert Wilckens
25,157 % Glaspulver / Glasmehl
7,547 % D60 Testbenzin
5,66 % Catalyst (Silikon Kautschuk)
5,031 % Owatrol

### Vergleichsversuche

| Test 1 | Gewichtsprozent | Auswirkung | Ergebnis |
|---|---|---|---|
| Catalyst | 1, 5 % | Zu hohe Viskosität | Zu geringe Haftkraft, leichte Verläufe |
| Öl | 3 % | | |
| Glaspulver | 5 % | | |
| Lack | 90, 5 % | | |

| Test 2 | Gewichtsprozent | Auswirkung | Ergebnis |
|---|---|---|---|
| Catalyst | 1, 5 % | Zu geringe Viskosität | Zu wässrige Lösung, starke Verläufe |
| Öl | 20 % | | |
| Glaspulver | 7 % | | |
| Lack | 71, 5 % | | |

| Test 3 | Gewichtsprozent | Auswirkung | Ergebnis |
|---|---|---|---|
| Catalyst | 1, 5 % | gewünschte Viskosität | Zu raue Oberfläche, ohne Verläufe |
| Öl | 10 % | | |
| Glaspulver | 9 % | | |
| Lack | 79, 5 % | | |

## Patentansprüche

1. Verwendung eines Mittels zum Grundieren von Silikonoberflächen, nämlich ausvulkanisierte Silikonfugen an Fenstern, Türen, im Verglasungsbereich sowie Sanitärbereich, **dadurch gekennzeichnet, dass** das Mittel eine Emulsion mit mindestens folgenden Komponenten ist:
• ein zur Vulkanisation von Kautschukmischungen einsetzbarer Katalysator,
• ein organisches Lösungs- oder Verdünnungsmittel,
• eine feinteilige Feststoff komponente als Verdicker und Haftverstärker,
• eine Lackfarbe als Trägersubstanz.

2. Verwendung eines Mittels zum Grundieren von Silikonoberflächen nach Anspruch 1, **dadurch gekennzeichnet, dass** der zur Vulkanisation von Kautschukmischungen einsetzbare Katalysator ausgebildet ist als ein zur Vulkanisation von Silikon-Kautschuk einsetzbarer Katalysator, als ein TFC-Silikon- Kautschuk-Typ-2-l-Katalysator, als ein Katalysator für Siloxan oder als ein Katalysator für synthetischen Kautschuk und/oder NaturKautschuk.

3. Verwendung eines Mittels zum Grundieren von Silikonoberflächen nach Anspruch 1, **dadurch gekennzeichnet, dass** das organische Lösungs- oder Verdünnungsmittel ausgebildet ist als Testbenzin.

4. Verwendung eines Mittels zum Grundieren von Silikonoberflächen nach Anspruch 1, **dadurch gekennzeichnet, dass** das organische Lösungs- oder Verdünnungsmittel ausgebildet ist als
ein Öl aus der Gruppe Terpentinöl-Balsam, als Leinöl, insbesondere Leinöl kaltgepresst, als naturbelassenes Öl, insbesondere Rapsöl, als Mineralöl oder als Mandelöl.

5. Verwendung eines Mittels zum Grundieren von Silikonoberflächen nach Anspruch 1, **dadurch gekennzeichnet, dass** die feinteilige Feststoff komponente als Glaspulver und/oder tetrapodales Zinkoxid ausgebildet ist .

6. Verwendung eines Mittels zum Grundieren von Silikonoberflächen nach Anspruch 1, **dadurch gekennzeichnet, dass** die Lackfarbe ausgebildet ist als eine wasserverdünnbare Dispersions-Lackfarbe, als eine lösemittelhaltige Lackfarbe, als ein Acryllack, als ein PU-Lack, als ein Polyurethanlack auf Wasserbasis, oder als Acrylwasserlack.

7. Verwendung eines Mittels zum Grundieren von Silikonoberflächen nach Anspruch 1, **dadurch gekennzeichnet, dass** das Mittel aus
3- 10 Gew.-% Katalysator,
5-20 Gew.-% organisches Lösungs- oder Verdünnungsmittel,
4- 40 Gew.-% Glaspulver und/oder tetrapodales Zinkoxid und
50 - 80 Gew.-% Lackfarbe
besteht.

8. Verwendung eines Mittels zum Grundieren von Silikonoberflächen nach Anspruch 1, **dadurch gekennzeichnet, dass** das Mittel aus
6-9 Gew.-% Katalysator,
5-15 Gew. -% organisches Lösungs- oder Verdünnungsmittel,
5-8 Gew.-% Glaspulver und Rest Lackfarbe besteht.

9. Verwendung eines Mittels zum Grundieren von Silikonoberflächen nach Anspruch 1, **dadurch gekennzeichnet, dass** das Mittel Polyvinylpyrrolidon enthält.

10. Verwendung eines Mittels zum Grundieren von Silikonoberflächen nach Anspruch 1, **dadurch gekennzeichnet, dass** das Mittel Titandioxid und/oder Speisestärke und/ oder Mehl enthält.

11. Verwendung eines Mittels zum Grundieren von Silikonoberflächen nach Anspruch 1, **dadurch gekennzeichnet, dass** die als Trägersubstanz eingesetzte Lackfarbe 20 bis 70 Gew.-% eines Bindemittels aus der Gruppe Acrylat-Dispersionslack, Polyurethan, Epoxid, ein auf Epoxid basiertes Farbbindemittel, Alkyd, Polysiloxan, ein acrylbasiertes Farbbindemittel und/oder eine Reinacrylatdispersion enthält.

## Claims

1. A use of an agent for priming silicon surfaces, namely vulcanized silicone joints on windows, doors, in the glazing area and sanitary areas, **characterized in that**, the agent is an emulsion including at least the following components:
- a catalyst configured to vulcanize rubber mixes,
- an organic solvent or thinner,
- a fine particle solid material configured as a thickener and adhesion enhancer
- a varnish paint forming a carrier substance.

2. The use of the agent for priming the silicon surfaces according to claim 1, **characterized in that**, the catalyst configured to vulcanize the rubber mixes is configured as a catalyst configured to vulcanize silicone rubber, as a TFZ-silicone-rubber-type- 2-1 catalyst, a catalyst for siloxane, or a catalyst for synthetic rubber and/or natural rubber.

3. The use of the agent for priming the silicone surfaces according to claim 1, **characterized in that**, the organic solvent or thinner is configured as white spirit.

4. The use of the agent for priming the silicone surfaces according to claim 1, **characterized in that**, the organic solvent or thinner is configured as an oil from the group consisting of turpentine oil balm, linseed oil, in particular cold pressed linseed oil, natural oil, in particular rapeseed oil, mineral oil or almond oil.

5. The use of the agent for priming the silicone surfaces according to claim 1, **characterized in that**, the fine particle solid material is configured as glass powder and/or tetrapodal zinc oxide.

6. The use of the agent for priming the silicone surfaces according to claim 1, **characterized in that**, the varnish paint is configured as water thinnable dispersion varnish paint, a varnish paint including solvent, an acrylic varnish paint, a PU-varnish, a water based polyurethane varnish or an acrylic water varnish.

7. The use of the agent for priming the silicon surfaces according to claim 1, **characterized in that**, the agent includes 3 -10 percent by weight catalyst, 5 to 20% by weight organic solvent or thinner, 4 - 40% by weight glass powder and/or tetrapodal zinc oxide, and 50 to 80% by weight varnish paint.

8. The use of the agent for priming the silicon surfaces according to claim 1, **characterized in that**, the agent includes 6 to 9% by weight catalyst, 5 to 15% by weight organic solvent or thinner, 5 - 8% by weight glass powder, and rest varnish paint.

9. The use of the agent for priming the silicon surfaces according to claim 1, **characterized in that**, the agent includes polyvinyl pyrrolidone.

10. The use of the agent for priming the silicon surfaces according to claim 1, **characterized in that**, the agent includes titanium dioxide and/or food starch and/or flour.

11. The use of the agent for priming the silicon surfaces according to claim 1, **characterized in that**, the varnish paint used for the carrier substance includes 20 - 70% by weight of a binder from the group consisting of acrylate dispersion varnish, polyurethane, epoxy, an epoxy-based paint binder, alkyd, polysiloxan and, an acrylic based paint binder, and/or a pure acrylate dispersion.

## Revendications

1. Utilisation d'un agent pour appliquer une couche de base sur des surfaces en silicone, s'agissant de joints en silicone complètement vulcanisés équipant des fenêtres, des portes, des vitrages ainsi que les installations sanitaires, **caractérisée en ce que** ledit agent est une émulsion comportant au moins les constituants suivants :
• un catalyseur pouvant être mis en œuvre pour la vulcanisation de mélanges de caoutchouc,
• un solvant ou diluant organique,
• un constituant solide finement dispersé servant d'épaississant et de renfort d'adhérence,
• une peinture en tant que substance de support.

2. Utilisation d'un agent pour appliquer une couche de base sur des surfaces en silicone selon la revendication 1, **caractérisée en ce que** le catalyseur pouvant être mis en œuvre pour la vulcanisation de mélanges de caoutchouc est réalisé sous forme d'un catalyseur pouvant être mis en œuvre pour la vulcanisation de caoutchoucs de silicone, d'un catalyseur de caoutchoucs de silicone TFC de type 2-1, d'un catalyseur pour siloxanes ou d'un catalyseur pour caoutchoucs de synthèse et/ou caoutchoucs naturels.

3. Utilisation d'un agent pour appliquer une couche de base sur des surfaces en silicone selon la revendication 1, **caractérisée en ce que** le solvant ou diluant organique est réalisé sous forme de white spirit.

4. Utilisation d'un agent pour appliquer une couche de base sur des surfaces en silicone selon la revendication 1, **caractérisée en ce que** le solvant ou diluant organique est réalisée sous forme d'une huile issue du groupe constitué par l'essence de térébenthine, d'huile de lin, plus particulièrement d'huile de lin pressée à froid, d'huile vierge, plus particulièrement d'huile de colza, d'huile minérale ou d'huile d'amande.

5. Utilisation d'un agent pour appliquer une couche de base sur des surfaces en silicone selon la revendication 1, **caractérisée en ce que** le constituant solide finement dispersé est réalisé sous forme de poudre de verre et/ou d'oxyde de zinc de type tétrapode.

6. Utilisation d'un agent pour appliquer une couche de base sur des surfaces en silicone selon la revendication 1, **caractérisée en ce que** la peinture est réalisée sous forme d'une peinture à dispersion pouvant être diluée à l'eau, d'une peinture contenant des solvants, d'une peinture acrylique, d'une peinture PU, d'une peinture polyuréthane à base d'eau ou d'une peinture acrylique à base d'eau.

7. Utilisation d'un agent pour appliquer une couche de base sur des surfaces en silicone selon la revendication 1, **caractérisée en ce que** ledit agent est constitué de 3 à 10 % en poids de catalyseur,
5 à 20 % en poids de solvant ou diluant organique,
4 à 40 % en poids de poudre de verre et/ou d'oxyde de zinc de type tétrapode, et
50 à 80 % de peinture.

8. Utilisation d'un agent pour appliquer une couche de base sur des surfaces en silicone selon la revendication 1, **caractérisée en ce que** ledit agent est constitué de
6 à 9 % en poids de catalyseur,
5 à 15 % en poids de solvant ou diluant organique,
5 à 8 % en poids de poudre de verre, le reste étant de la peinture.

9. Utilisation d'un agent pour appliquer une couche de base sur des surfaces en silicone selon la revendication 1, **caractérisée en ce que** ledit agent contient de la polyvinylpyrrolidone.

10. Utilisation d'un agent pour appliquer une couche de base sur des surfaces en silicone selon la revendication 1, **caractérisée en ce que** ledit agent contient du dioxyde de titane et/ou de l'amidon alimentaire et/ou de la farine.

11. Utilisation d'un agent pour appliquer une couche de base sur des surfaces en silicone selon la revendication 1, **caractérisée en ce que** la peinture mise en œuvre en tant que substance de support contient 20 à 70 % en poids d'un liant issu du groupe constitué par les peintures acryliques à dispersion, les polyuréthanes, les époxydes, un liant de peinture à base d'époxyde, de l'alkyde, du polysiloxane, un liant de peinture à base d'acryle et/ou une dispersion d'acrylate pur.
